# EUROPÄISCHE PATENTSCHRIFT

(11) **EP 2 923 192 B1**
(45) Veröffentlichungstag und Bekanntmachung des Hinweises auf die Patenterteilung: **23.08.2017**
(21) Anmeldenummer: 13792694.5
(22) Anmeldetag: 20.11.2013
(51) Int. Cl.: G01N 3/58

(54) **PRÜFKÖRPER ZUR BESTIMMUNG DER SCHNEIDLEISTUNG EINES MESSERS**
TEST PIECE FOR DETERMINING THE CUTTING PERFORMANCE OF A KNIFE
CORPS DE CONTRÔLE POUR LA DÉTERMINATION DU POUVOIR DE COUPE D'UN COUTEAU

(30) Priorität: 21.11.2012 DE 102012221283
(43) Veröffentlichungstag der Anmeldung: 30.09.2015
(73) Patentinhaber: WMF Württembergische Metallwarenfabrik AG, 73309 Geislingen/Steige (DE)
(72) Erfinder: MAYER, Roman, 73614 Schorndorf (DE); VON BANK, Reinhold, 88433 Schemmerhofen (DE)
(74) Vertreter: BRP Renaud & Partner mbB Rechtsanwälte Patentanwälte Steuerberater
(86) Internationale Anmeldenummer: PCT/EP2013/074296
(87) Internationale Veröffentlichungsnummer: WO 2014/079891

(56) Entgegenhaltungen:
- DD-A1- 157 022
- DE-A1- 4 027 577
- DE-A1- 4 211 612
- DE-A1-102004 040 427
- US-A- 2 472 994
- US-A- 3 447 366
- US-A- 4 528 843
- US-A- 5 450 745
- US-A- 5 571 956
- US-A1- 2010 281 965
- US-A1- 2011 146 372
- US-A1- 2011 269 131
- HANIFI COPUR ET AL: "Field and laboratory studies on natural stones leading to empirical performance prediction of chain saw machines", INTERNATIONAL JOURNAL OF ROCK MECHANICS AND MINING SCIENCES, PERGAMON, UNITED KINGDOM, Bd. 48, Nr. 2, 27. November 2010 (2010-11-27), Seiten 269-282, XP028140705, ISSN: 1365-1609, DOI: 10.1016/J.IJRMMS.2010.11.011 [gefunden am 2010-12-08]

## Beschreibung

Die vorliegende Erfindung betrifft einen Prüfkörper und ein Verfahren und eine Vorrichtung zur Bestimmung der Schneidleistung eines Messers.

Momentan wird die Schneidleistung von Messern gemäß DIN ISO 8442-5 mittels eines genormten Verfahrens geprüft. Diese Prüfung umfasst die Bewertung der Anfangsschneidfähigkeit (Schärfe zu Beginn [ICP-Wert]) und die der Schneidhaltigkeit (Schärfe nach Gebrauch [CER-Wert = TCC-Wert]). Die Schneidleistung des Messers wird dabei mittels eines Prüfaufbaus getestet, bei dem das zu prüfende Messer mit einer definierten Vorspannkraft [50 N], einer vordefinierten Geschwindigkeit [50mm/s] und einer vordefinierten Schnittlänge [40mm] in einen Papierstapel sägt. Jeder Zyklus umfasst dabei eine Vor- und eine Rückwärtsbewegung über jeweils 40 mm. Die so ermittelte Anfangsschneidfähigkeit ist definiert als die Summe der durchgeschnittenen Papierstreifen der ersten drei Zyklen. Die Schneidhaltigkeit hingegen unterscheidet sich dabei je nach Klingentyp in Klingen, die von einem Verwender nachgeschärft werden können (Typ A) und Klingen, die nicht zum Nachschärfen mittels eines Wetzstahls vorgesehen sind (Typ B). Die Schneidhaltigkeit wird dabei als die Summe der durchgeschnittenen Papierstreifen ermittelt und zwar bei Klingen gemäß dem Typ A nach 60 Zyklen und bei Klingen gemäß dem Typ B nach 200 Zyklen. Um einen schnellen Klingenverschleiß zu simulieren, wird dem Papier zusätzlich Quarz in Höhe von 5 ± 0,5 Gew.-% beigemengt.

Aus der US 2010/0281965 A1 ist eine Prüfvorrichtung zur Bestimmung der Schneidleistung eines Messers bekannt, mit einem Prüfkörper mit einem Grundkörper aus einem Kunststoff mit unterschiedlichen Schichten, in welche das zu prüfende Messer eingedrückt wird.

Aus der DE 10 2004 040 427 A1 ist ein Verfahren zur Bestimmung der Schneidleistung eines Messers bekannt, bei dem das Messer mit seiner Schneide in ein Referenzprodukt, hier ein Kunststoffprofil, mit definierten Eigenschaften eingedrückt wird. Hierbei wird der Zeit-Kraft-Verlauf erfasst und ausgewertet, was als Maß der Schneidfähigkeit des getesteten Messers dienen soll.

Aus der DD 157 022 A1 ist ebenfalls ein Verfahren zur Bestimmung der Schneidleistung bekannt, bei dem der Prüfling mit seiner Schneide in einem Prüfwerkstoff mit definierten Eigenschaften eingedrückt und während des Eindrückens eine Kraft-, Weg- Abhängigkeit als Qualitätsparameter ermittelt wird.

Nachteilig bei dem bekannten und beschriebenen Verfahren ist jedoch, dass das Sägen von Papier generell kein geeignetes Mittel darstellt, um die Schärfe von Klingen an Messern beurteilen zu können. In der Realität umfasst eine Schnittbewegung an Lebensmitteln nämlich einen weit höheren vertikalen Schneidweg im Vergleich zum horizontalen Verfahrweg beim DIN-Papierschneidtest. Dies bedeutet, dass man in der Praxis eher mit einer kleinen zusätzlichen Relativbewegung durch eine Tomate drückt, als dass man diese zersägt. Auch die Kumulierung der Einzelwerte zur Ermittlung der Schneidhaltigkeit stellt kein probates Verfahren dar, da nach Gebrauch einer Klinge interessant ist wie viel sie noch schneiden kann und nicht wie viel sie schon geschnitten hat.

Ein besonderes Problem ergibt sich auch durch die Nutzung von abrasivem Papier, das keine realistische Verschleißsituation darstellt, da unter realen Bedingungen der größte Verschleiß durch Drücken/Schneiden auf der Schneidunterlage (Holz, Kunststoff, etc.) entsteht. Auch eignet sich Papier generell nicht als Medium zur Beurteilung der Schneidleistung, da an der Schneide des Messers eine kleine Kante bzw. ein kleiner Grat vorhanden sein muss, um das Papier überhaupt anreißen zu können. Je besser eine Schneide jedoch poliert bzw. entgratet ist, desto schlechter schneidet diese durch Papier.

Um darüber hinaus vergleichbare Ergebnisse hinsichtlich der ermittelten Schneidleistung erhalten zu können, ist eine exakte Konditionierung des verwendeten Papiers hinsichtlich Temperatur und Feuchtigkeit erforderlich, was in der Praxis oftmals nicht durchgeführt wird oder aber bei Durchführung zu relativ hohen Kosten führt. Das jedoch größte Problem stellt der fehlende Praxisbezug des bisherigen Tests dar.

Die vorliegende Erfindung beschäftigt sich daher mit dem Problem, einen Prüfkörper sowie ein Verfahren zur Bestimmung der Schneidleistung eines Messers anzugeben, welche die Nachteile des Standes der Technik überwindet und zugleich einen hohen Praxisbezug aufweist.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, anstelle eines Papierstapels einen neuartigen Prüfkörper aus Kunststoff mit definierten Eigenschaften für die Bestimmung der Schneidleistung eines Messers zu verwenden. Der erfindungsgemäße Prüfkörper besitzt einen Grundkörper aus einem Kunststoff mit einer Härte zwischen 30 und 90 Shore-A, vorzugsweise 60-62 Shore-A, und eine haut-/folienähnliche Schicht aus Polypropylen (PP). Durch die Verwendung eines derartigen Prüfkörpers lässt sich die Schneidleistung eines Messers äußerst exakt und darüber hinaus frei von nahezu sämtlichen die Ergebnisse verfälschenden Parametern, wie beispielsweise Feuchte oder Temperatur, ermitteln. Die Schicht simuliert dabei beispielsweise eine Haut, wie diese bei Gemüse und Obst oft vorhanden ist. Im Vergleich zu dem bisher verwendeten Papierstapel, ist eine Konditionierung des erfindungsgemäßen Prüfkörpers hinsichtlich beispielsweise seiner Feuchtigkeit nicht erforderlich, so dass diese Fehlerquelle bereits sicher ausgeschlossen werden kann. Von besonders großem Vorteil bei dem erfindungsgemäßen Prüfkörper ist jedoch dessen hoher Praxisbezug.

Selbstverständlich ist zur Gewinnung von vergleichbaren und aussagekräftigen Messergebnissen auch die Verwendung eines Prüfkörpers mit stets gleichen und exakt definierten Eigenschaften erforderlich, wobei insbesondere ein Prüfkörper mit einem Grundkörper aus einem thermoplastische Elastomer (TPE) mit einer Härte von ca. 60 Shore A, insbesondere 62 Shore-A, einer Breite von 20 mm und einer Dicke von 6 mm verwendet wird. Da die Härte der Kunststoffe typischerweise in einem Bereich +/-5 Shore variieren kann (bei genauer Prozessführung +/-3 Shore) ist es vorstellbar, dass das Prüfverfahren dies durch ein geeignetes mathematisches Verfahren ausgleichen kann. Insbesondere kann eine Prüfvorrichtung dafür selbst über ein integriertes Härteprüfgerät verfügen.

Bei einer vorteilhaften Weiterbildung der Erfindung weisen der Prüfkörper eine Breite b von ca. 20 mm und eine Dicke a von ca. 6,0 mm und die Schicht eine Dicke von ca. 0,052 mm auf. Diese vergleichsweise kompakten Abmessungen des Prüfkörpers ermöglichen einerseits ein einfaches Handling und andererseits eine ausreichende Versuchsdauer beim Durchführen von Schnittversuchen zur Bestimmung der Schneidleistung eines Messers. Auch ist bei den kompakten Abmessungen ein Materialaufwand reduziert. Der Prüfkörper kann dabei in der Art von Meterware hergestellt sein und für die eigentliche Prüfung entsprechend abgelängt werden.

Zweckmäßig weist die Schicht eine stoffschlüssige Klebeschicht, insbesondere eine Acrylatklebeschicht auf oder ist als solche ausgebildet. Die erfindungsgemäße Schicht kann somit in der Art eines bekannten Tesafilms ausgebildet sein und über die Klebeschicht fest und zugleich einfach mit dem Grundkörper bzw. mit der darauf angeordneten Zwischenschicht verbunden werden. Die für die Schicht verwendete Polypropylenfolie kann dabei eine Dicke von ca. 52 µm aufweisen und so die übliche Hautdicke von Lebensmitteln simulieren.

Bei einer weiteren Ausführungsform der Erfindung ist zwischen dem Grundkörper und der hautartigen Schicht eine Zwischenschicht angeordnet. Diese kann aus verdichtetem Polyethylen (HDPE) ausgebildet sein. Die Zwischenschicht kann als Haftschicht dienen und das Verbinden der hautähnlichen Schicht mit dem Grundkörper erleichtern. Der Grundkörper selbst ist vorzugsweise aus einem thermoplastischen Elastomer (TPE) ausgebildet und stoffschlüssig mit der Zwischenschicht und über die Klebeschicht auch stoffschlüssig mit der haut-/folienähnlichen Schicht verbunden.

Die vorliegende Erfindung beruht weiter auf dem allgemeinen Gedanken, die Schneidleistung eines Messers nicht wie bisher mittels Sägen zu ermitteln, sondern durch Eindrücken des Messers mit seiner Schneide in den zuvor beschriebenen erfindungsgemäßen Prüfkörper, der definierte Eigenschaften aufweist und wobei während des Eindrückens sowohl die Eindrückkraft als auch die Eindringtiefe gemessen werden. Durch die Erfassung dieser beiden Parameter und zugleich durch die Verwendung des Prüfkörpers mit definierten Eigenschaften, lässt sich die Schneidleistung des Messers äußerst exakt und darüber hinaus frei von nahezu sämtlichen die Ergebnisse verfälschenden Parameter ermitteln. Auch können mit dem Verfahren polierte bzw. entgratete Schneiden bewertet werden, deren Schneidleistung beim bisherigen Papierschneidetest eher schlecht ausgefallen wäre, da die zum Anreißen des Papiers erforderlichen Grate bzw. Kanten nicht bzw. nicht ausreichen vorhanden waren. Von besonders großem Vorteil bei dem erfindungsgemäßen Verfahren ist jedoch dessen hoher Praxisbezug, da nunmehr ein Drücken mit einer Relativbewegung und nicht nur ein Sägen erfolgt. Vorteil dieser Methode ist zudem, dass zur Messung der Schneidfähigkeit eine quasi zerstörungsfreie Prüfung durchgeführt wird.

Zweckmäßig wird das zu prüfende Messer maximal 3 mm tief in den Prüfkörper eingedrückt. Die maximal vorgegebene Eindringtiefe zur Durchführung des erfindungsgemäßen Verfahrens von 3 mm ermöglicht dabei insbesondere die Gewinnung von vergleichbaren Werten, da bei einer deutlich größeren Eindringtiefe die Kraft zur seitlichen Materialverdrängung einen zu großen Einfluss hat, insbesondere bei Messern mit einem breiten Rücken. Bei einer maximalen Eindringtiefe von deutlich mehr als 3 mm würde somit nicht mehr nur die reine Schneidleistung bzw. Schärfe des Messers gemessen. Selbstverständlich ist zur Gewinnung von vergleichbaren und aussagekräftigen Messergebnissen auch die Verwendung des erfindungsgemäßen Prüfkörpers mit stets gleichen und exakt definierten Eigenschaften erforderlich.

Gemäß einer vorteilhaften Weiterbildung des erfindungsgemäßen Verfahrens, wird das Messer mit seiner Schneide parallel zur Oberfläche des Prüfkörpers angeordnet, wobei das Messer mit seiner Schneide auf die Oberfläche des Prüfkörpers gedrückt wird und wobei die Schneide und die Oberfläche des Prüfkörpers unter einem Winkel α, insbesondere unter einem Winkel von α ca. 30°, zur Horizontalen geneigt sind. Hierdurch kann nicht nur eine orthogonal zur Oberfläche des Prüfkörpers wirkende Kraftkomponente erzeugt werden, sondern durch das Kräfteparallelogramm auch eine parallel zur Oberfläche des Prüfkörpers wirkende Kraft. Hierdurch kann die normale Schneidbewegung besonders praxisnah simuliert werden.

Die vorliegende Erfindung beruht außerdem auf dem allgemeinen Gedanken, eine Vorrichtung zur Bestimmung der Schneidleistung eines Messers anzugeben, mit einem Prüfkörper mit den zuvor beschriebenen Eigenschaften, in den das zu prüfende Messer eingedrückt wird. Ebenfalls weist die erfindungsgemäße Vorrichtung eine erste Erfassungseinrichtung zum Erfassen der Eindrückkraft während des Eindrückens des Messers in den Prüfkörper sowie eine zweite Erfassungseinrichtung zum Erfassen der Eindringtiefe auf. Über eine Auswerteeinrichtung können nun die erfasste Eindrückkraft und die erfasste Eindringtiefe ausgewertet und insbesondere beurteilt werden. Eine derartige Vorrichtung lässt sich konstruktiv vergleichsweise einfach und dadurch auch kostengünstig herstellen, wobei die Vorrichtung in nahezu allen Laboren sofort einsatzbereit ist, da insbesondere bisher erforderliche Klimaschränke zur Konditionierung des Papiers nunmehr bei der Verwendung des erfindungsgemäßen Prüfkörpers nicht mehr erforderlich sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Vorrichtung zur Bestimmung der Schneidleistung eines Messers und zur Durchführung eines erfindungsgemäßen Verfahrens zur Bestimmung der Schneidleistung eines Messers unter Verwendung eines erfindungsgemäßen Prüfkörpers,
- Fig. 2: den erfindungsgemäßen Prüfkörper in einer Detailansicht,
- Fig. 3: eine mögliche Ausführungsform einer Halteeinrichtung zum Halten des Prüfkörpers,
- Fig. 4: eine Darstellung wie in Fig. 3, jedoch mit eingeschobenem Prüfkörper,
- Fig. 5: ein während der Prüfung aufgezeichnetes Kraftwegdiagramm bei einem unbeschichteten Prüfkörper,
- Fig. 6: eine Darstellung wie in Fig. 5, jedoch bei einem erfindungsgemäß beschichteten Prüfkörper,
- Fig. 7: eine diagrammartige Gegenüberstellung von in einem Praxistest für verschiedene Messer A bis K vergebene Noten im Vergleich zu den Ergebnissen eines konventionellen Papierschneidtests,
- Fig. 8: eine Darstellung wie in Fig. 7, jedoch bei einer Gegenüberstellung der im Praxisschneidtest vergebenen Noten mit den bei dem erfindungsgemäßen Verfahren ermittelten Werten.

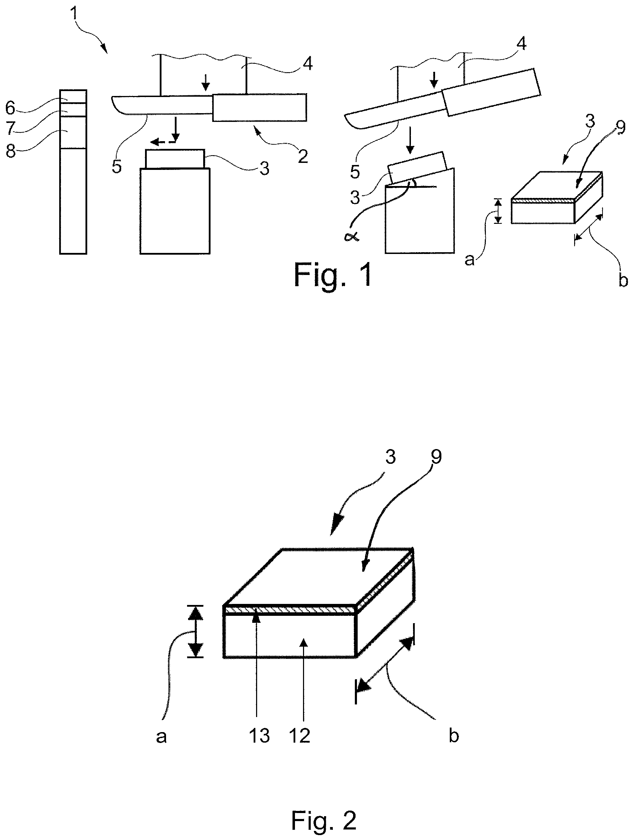

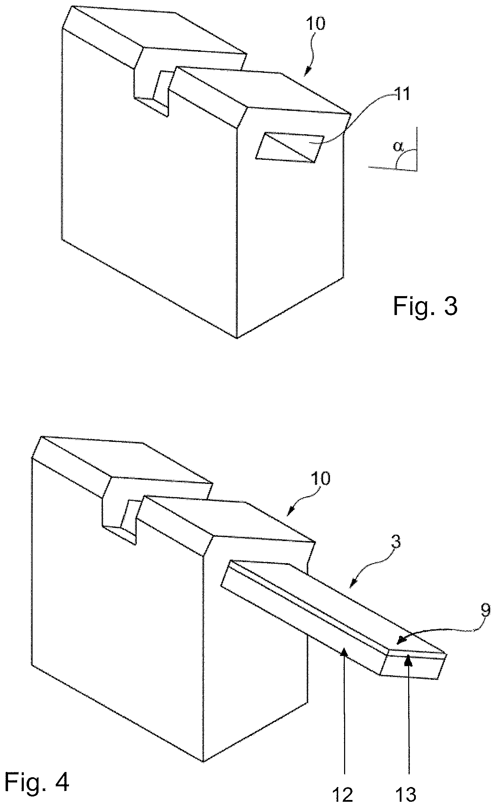

Entsprechend der Figur 1 weist eine erfindungsgemäße Vorrichtung 1 zur Bestimmung der Schneidleistung eines Messers 2 einen erfindungsgemäßen Prüfkörper 3 mit definierten Eigenschaften auf, in welchen das zu prüfende Messer 2 insbesondere mittels eines Stempels 4 eingedrückt wird. Der Prüfkörper 3 ist dabei von einer Halteeinrichtung 10 gehalten, wie diese bspw. in den Fig. 3, 4 gezeigt ist. Selbstverständlich wird dabei nicht das gesamte Messer 2 in den Prüfkörper 3 eingedrückt, sondern lediglich dessen Schneide 5 bzw. Klinge. Des Weiteren umfasst die Vorrichtung 1 eine erste Erfassungseinrichtung 6 zum Erfassen der Eindrückkraft sowie eine zweite Erfassungseinrichtung 7 zum Erfassen der Eindringtiefe. Ebenfalls vorgesehen ist eine Auswerteeinrichtung 8 zum Auswerten der erfassten Eindrückkraft und der erfassten Eindringtiefe und zum Beurteilen der erfassten Werte. Im gezeigten Beispiel wird das Messer 2 von oben in den Prüfkörper 3 eingedrückt, wobei selbstverständlich auch ein umgedrehter Versuchsaufbau denkbar ist, bei welchem das Messer 2 unten mit nach oben gerichteter Schneide 5 angeordnet ist und der Prüfkörper 3 von oben auf die Schneide 5 des Messers 2 gedrückt wird.

Der erfindungsgemäße Prüfkörper 3 zur Bestimmung der Schneidleistung des Messers 2 besitzt einen Grundkörper 12 aus einem Kunststoff mit einer Härte zwischen 30 und 90 Shore-A, insbesondere aus einem thermoplastischen Elastomer (TPE) bzw. Polyethylen (PE), und eine hautähnliche Schicht 9 aus Polypropylen (PP). Der Grundkörper 12 besitzt vorzugsweise eine Härte von 60 Shore-A, eine Breite b von ca. 20 mm und eine Dicke a von ca. 6,0 mm, wogegen die Schicht 9 eine Dicke von ca. 0,052 mm aufweist. Die Schicht 9 ist beispielsweise als Polyproylenfolie ausgebildet und weist eine stoffschlüssige Klebeschicht, insbesondere eine Acrylatklebeschicht, auf, über welche sie mit dem Grundkörper 12 verklebt ist. Eine derartige Schicht 9 bzw. Haut stellt einen hohen Praxisbezug, insbesondere zu Lebensmitteln mit Haut, beispielsweise zu Tomaten, dar.

Darüber hinaus kann zwischen dem Grundkörper 12 und der Schicht 9 eine Zwischenschicht 13 angeordnet sein, die insbesondere aus verdichtetem Polyethylen (HDPE) ausgebildet ist. Die Zwischenschicht weist 13 eine Dicke von ca. 0,1 mm aufweist und bildet zugleich eine verbesserte Haftung für die aufzuklebende Schicht 9. In diesem Fall wäre der Grundkörper 12 nur 5,9 mm dick.

Zur Durchführung des erfindungsgemäßen Verfahrens, wie dies später noch erläutert wird, ist sicherzustellen, dass die Schicht 9 rutschfest auf dem Prüfkörper 3 bzw. auf der Zwischenschicht 13 angeordnet ist. Durch die stoffschlüssig mit dem Prüfkörper 3 verbundene Schicht 9 kann eine Relativbewegung zwischen der Schicht 9 und dem Prüfkörper 3 zuverlässig ausgeschlossen werden.

Zur Durchführung des erfindungsgemäßen Verfahrens kann das Messer 2 mit seiner Schneide 5 orthogonal auf den Prüfkörper 3 mit der Schicht 9 gedrückt werden, wie dies in der linken Darstellung in der Figur 1 gezeigt ist, wobei alternativ auch vorstellbar ist, dass das Messer 2 mit seiner Schneide 5 parallel zur Oberfläche des Prüfkörpers 3 angeordnet und anschließend mit seiner Schneide 5 auf die Oberfläche des Prüfkörpers 3, das heißt der Schicht 9, gedrückt wird, wobei die Schneide 5 und die Oberfläche des Prüfkörpers 3 unter einem Winkel α, insbesondere unter einem Winkel von α ca. 30°, zur Horizontalen geneigt sind, wie dies in der rechten Darstellung der Fig. 1 gezeigt ist.

Bei einer weiteren alternativen Ausführungsform des erfindungsgemäßen Verfahrens wird das Messer 2 mit seiner Schneide 5 orthogonal in den Prüfkörper 3 gedrückt und gleichzeitig relativ zu diesem bewegt, wie dies mit dem unterbrochen gezeichneten und nach links deutenden Pfeil in der linken Darstellung in Figur 1 angedeutet ist. Eine derartige Durchführung des Verfahrens stellt jedoch höhere Anforderungen an die Vorrichtung 1.

In den Fig. 3 und 4 ist dabei eine mögliche Ausführungsform der Halteeinrichtung 10 gezeigt, welche den Prüfkörper 3 während der Durchführung des Verfahrens fixiert. Die Halteeinrichtung 10 ist beispielsweise als Metallkörper oder als Kunststoffkörper ausgebildet und besitzt eine Einschuböffnung 11, in welche der Prüfkörper 3 in exakt vordefinierter Lage einschiebbar ist. Dadurch kann sichergestellt werden, dass der Prüfkörper 3 beim Verfahren stets dieselbe Stellung zum zu prüfenden Messer 2 hat. Selbstverständlich kann dabei ein Winkel α, der eine Neigung des Prüfkörpers 3 beschreibt, frei gewählt werden.

Bei dem erfindungsgemäßen Verfahren wird das zu prüfende Messer 2 maximal ca. 3 mm tief in den Prüfkörper 3 eingedrückt, um tatsächlich auch lediglich die Schneidleistung zu messen und nicht etwa zusätzlich die Kraft, die erforderlich ist, um das Material des Prüfkörpers 3 zur Seite hin zu verdrängen. Eine derartige Verdrängungskraft ist insbesondere bei zu großer Eindringtiefe und bei Messern 2 bei breitem Rücken zu erwarten, wobei in diesem Fall die Ergebnisse verfälscht würden.

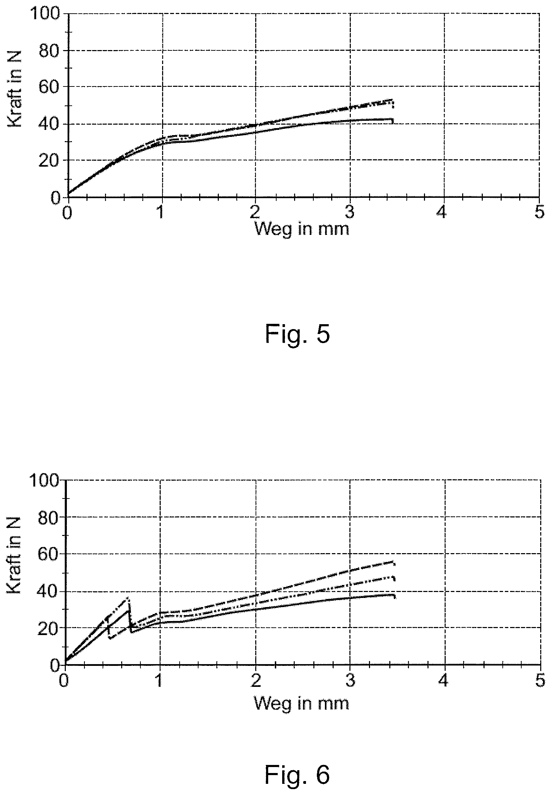

Betrachtet man die Figur 5, so kann man erkennen, dass das Messer 2 insgesamt drei Mal mit seiner Schneide 5 in den Prüfkörper 3 eingedrückt wurde, woraus drei vergleichsweise nahe beieinanderliegende Kurven resultieren. Die drei unterschiedlichen Kurven resultieren dabei daraus, dass an verschiedenen Stellen in das thermoplastische Elastomer eingeschnitten wurde - evtl. reicht auch nur eine Messung aus, um eine genaue Prüfaussage zu erhalten. Im Unterschied zu dem in Figur 5 gezeigten Diagramm, weist das gemäß der Figur 6 gezeigte Diagramm im Bereich einer Eindringtiefe von ca. 0,4 bis 0,6 mm einen Sprung auf, was charakteristisch für einen Prüfkörper 3 mit einer zusätzlich der Schneide 5 des Messers 2 zugewandten Schicht 9 ist. Auf der Ordinate in den Diagrammen der Figuren 5 und 6 ist dabei die Eindrückkraft in Newton abgetragen, wogegen auf der Abszisse die Eindringtiefe in Millimetern aufgezeichnet ist. Der Sprung bei der Eindringtiefe von ca. 0,4 bis 0,6 mm in der Figur 6 resultiert aus einem Durchdringen der Schicht 9. Ein derartiger Sprung ist bei den Kurven gemäß der Figur 5 nicht zu erkennen, da hier ein Prüfkörper 3 ohne zusätzliche Schicht 9 verwendet wurde.

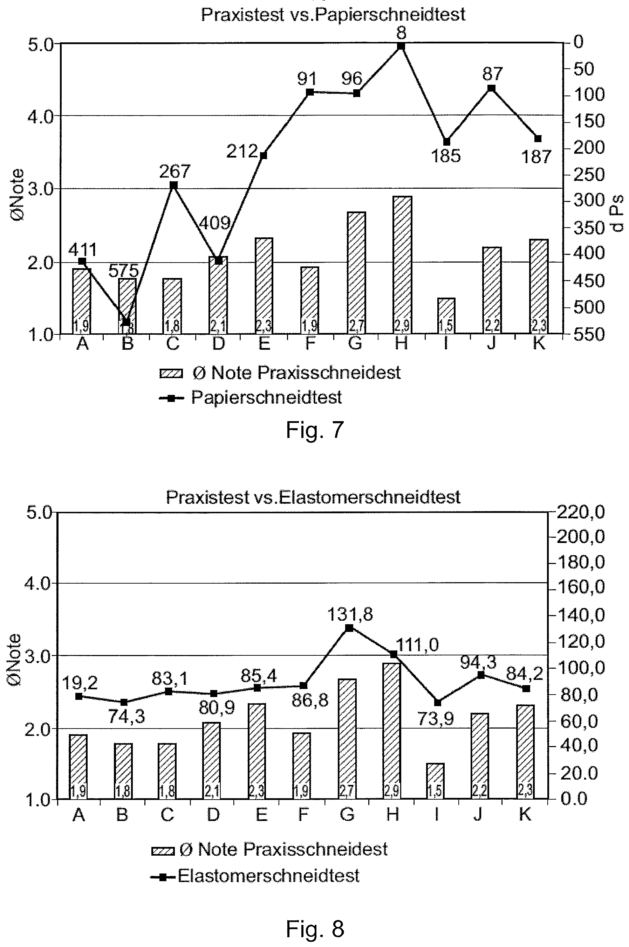

Betrachtet man die Figur 7, so stellt diese einen hausintern durchgeführten Praxistest dar, bei dem verschiedene Schneidgüter (Tomate, Fleisch, Zwiebel, Sellerie, Karotte, usw.) mit verschiedenen Messern A-K geschnitten wurden. Die Messer A-K sind dabei Messer 2 im Sinne der Erfindung. Bei dem durchgeführten Praxistest nahmen sieben Probanden teil, die das jeweilige Messer entsprechend benoten sollten. Es fällt dabei beispielsweise auf, dass das Messer I von den Probanden die Note 1,5 erhielt, wogegen es bei einem Papierschneidetest lediglich durchschnittlich abschnitt. Der durchgeführte Papierschneidetest wurde mit einer Prüfvorrichtung gem. DIN Norm durchgeführt. In gleicher Weise unterscheiden sich auch die Ergebnisse beim Messer C, für welches die Probanden durchschnittlich die Note 1,8 erteilten, wogegen beim Papierschneidetest lediglich ein Wert von 267 erzielt wurde. Betrachtet man die beiden Messer B und C, so haben diese seitens der sieben Probanden dieselbe gute Note 1,8 erhalten, wogegen der Papierschneidetest gemäß der DIN ISO 8442-5 völlig unterschiedliche Werte von 525 und 267 zeigt.

In Figur 8 ist nun der Praxistest, das heißt die durchschnittlichen Noten der sieben Probanden den mit dem erfindungsgemäßen Verfahren ermittelten Schneidleistung gegenübergestellt, wobei die Noten seitens der Probanden in den Figuren 7 und 8 identisch aufgetragen sind. Der nahezu identische Verlauf der Werte hinsichtlich der seitens der Probanden vergebenen Noten und der mit dem erfindungsgemäßen Verfahren ermittelten Schneidleistungswerte macht den deutlichen Praxisbezug des erfindungsgemäßen Verfahrens zur Bestimmung der Schneidleistung des Messers 2 deutlich, da beispielsweise die beiden schlechtesten Messer G, H in beiden Tests ebenso wie das beste Messer I eindeutig erkannt wurden. Beispielsweise weist das Messer I die seitens der Probanden vergebene Note 1,5 und seitens des erfindungsgemäßen Verfahrens einen Wert von 73,9 auf. Die Kurve der mit dem erfindungsgemäßen Verfahren bestimmten Schneidleistungswerte korreliert dabei deutlich besser mit den Säulen der von den Probanden vergebenen Noten, als dies beim bisherigen Papierschneidetest gemäß der Figur 7 der Fall ist.

Im Vergleich zu bisherigen Papierstapeln zur Ermittlung der Schneidleistung bzw. der Anfangsschneidfähigkeit und der Schneidhaltigkeit, ist der erfindungsgemäß verwendete Prüfkörper 3 relativ unempfindlich gegenüber äußeren Einflüssen, wie beispielsweise Temperatur oder Feuchte. Hierdurch kann insbesondere eine bisher erforderliche aufwändige Konditionierung, beispielsweise die Lagerung in einem Klimaschrank, vermieden werden. Durch die Verwendung des Prüfkörpers 3 mit vordefinierten Eigenschaften lassen sich reproduzierbare und aussagekräftige Ergebnisse hinsichtlich der Schneidleistung des Messers 2 erzielen.

Mit der Vorrichtung 1 und mit dem erfindungsgemäßen Prüfkörper 3 lässt sich somit ein einfaches und zugleich einen hohen Praxisbezug aufweisendes Verfahren zur Bestimmung der Schneidleistung eines Messers 2 angeben, welches insbesondere ohne aufwändige Konditionierung der Prüfkörper 3 auskommt. Zudem wird bei dem erfindungsgemäßen Verfahren und bei der Vorrichtung ein realistisches Schneidverhalten simuliert, welches eben gerade kein Sägen darstellt, sondern eher ein Drücken mit einer geringen Relativbewegung.

## Patentansprüche

1. Zur Bestimmung der Schneidleistung eines Messers (2) vorgesehenes Verfahren, wobei das Messer (2) mit seiner Schneide (5) in einen Prüfkörper (3) eingedrückt wird und während des Eindrückens sowohl die Eindrückkraft als auch die Eindringtiefe gemessen werden, **dadurch gekennzeichnet,**
**dass** der Prüfkörper (12) aus einem Kunststoff mit einer Härte zwischen 30 und 90 Shore-A und einer haut-/folienähnlichen Schicht (9) aus Polypropylen (PP) besteht.

2. Verfahren nach Anspruch 1,
**dadurch gekennzeichnet,**
- **dass** das Messer (2) mit seiner Schneide (5) parallel zur Oberfläche des Prüfkörpers (3) angeordnet wird,
- **dass** das Messer (2) mit seiner Schneide (5) auf die Oberfläche des Prüfkörpers (3) gedrückt wird, wobei die Schneide (5) und die Oberfläche des Prüfkörpers (3) unter einem Winkel α, insbesondere unter einem Winkel α von ca. 30°, zur Horizontalen geneigt sind.

3. Verfahren nach einem der vorhergehenden Ansprüche,
**dadurch gekennzeichnet,**
**dass** das zu prüfende Messer (2) maximal drei Millimeter tief in den Prüfkörper (3) eingedrückt wird.

4. Zur Durchführung des Verfahrens nach einem der Ansprüche 1 bis 3 vorgesehener Prüfkörper (3) mit einem Grundkörper (12) aus einem Kunststoff mit einer Härte zwischen 30 und 90 Shore-A und einer haut-/folienähnlichen Schicht (9) aus Polypropylen (PP).

5. Prüfkörper nach Anspruch 4,
**dadurch gekennzeichnet,**
**dass** der Kunststoff des Grundkörpers (12) ein thermoplastisches Elastomer (TPE), aufweist.

6. Prüfkörper nach Anspruch 4 oder 5,
**dadurch gekennzeichnet,**
**dass** zwischen dem Grundkörper (12) und der Schicht (9) eine Zwischenschicht (13) angeordnet ist, wobei die Zwischenschicht (13) Bestandteil des Grundkörpers (12) sein kann.

7. Prüfkörper nach Anspruch 6,
**dadurch gekennzeichnet,**
- **dass** die Zwischenschicht (13) aus verdichtetem Polyethylen (HDPE) ausgebildet ist, und/oder
- **dass** die Zwischenschicht (13) eine Dicke von ca. 0,1 mm aufweist.

8. Prüfkörper nach einem der Ansprüche 4 bis 7,
**dadurch gekennzeichnet,**
**dass** die haut-/folienähhnliche Schicht (9) eine Dicke von ca. 0,052 mm aufweist.

9. Prüfkörper nach einem der Ansprüche 4 bis 8,
**dadurch gekennzeichnet,**
**dass** der Prüfkörper (3) eine Breite b von ca. 20 mm und eine Dicke a von ca. 6,0 mm aufweist.

10. Prüfkörper nach einem der Ansprüche 5 bis 9,
**dadurch gekennzeichnet,**
**dass** die Schicht (9) eine stoffschlüssige mit der Zwischenschicht (13) verbindbare Klebeschicht, insbesondere eine Acrylatklebeschicht, aufweist.

11. Zur Bestimmung der Schneidleistung eines Messers (2) vorgesehene Vorrichtung (1),
**gekennzeichnet durch**
- einen Prüfkörper nach einem der Ansprüche 4 bis 10, in welchen das zu prüfende Messer (2) eingedrückt wird,
- eine erste Erfassungseinrichtung (6) zum Erfassen der Eindrückkraft,
- eine zweite Erfassungseinrichtung (7) zum Erfassen der Eindringtiefe,
- eine Auswerteeinrichtung (8) zum Auswerten der erfassten Eindrückkraft und der erfassten Eindringtiefe.

## Claims

1. Method for determining the cutting performance of a knife (2), wherein the blade (5) of the knife (2) is pressed into a test piece (3) and the push-in force and the penetration depth are measured as the knife is pressed in,
**characterised in that**
the test piece (12) consists of a plastic with a hardness between 30 and 90 Shore A and a skin-like/film-like layer (9) of polypropylene (PP).

2. Method according to claim 1,
**characterised in that**
- the blade (5) of the knife (2) is arranged parallel to the surface of the test piece (3),
- the blade (5) of the knife (2) is pressed onto the surface of the test piece (3), wherein the blade (5) and the surface of the test piece (3) are inclined at an angle α, in particular at an angle α of approx. 30°.

3. Method according to any one of the preceding claims,
**characterised in that**
the knife (2) to be tested is pressed a maximum of three millimetres into the test piece (3).

4. Test piece (3) for carrying out the method according to any one of claims 1 to 3 having a base body (12) made of a plastic with a hardness between 30 and 90 Shore A and a skin-like/film-like layer (9) of polypropylene (PP).

5. Test piece according to claim 4,
**characterised in that**
the plastic of the base body (12) has a thermoplastic elastomer (TPE).

6. Test piece according to claim 4 or 5,
**characterised in that**
an intermediate layer (13) is arranged between the base body (12) and the layer (9), wherein the intermediate layer (13) can be part of the base body (12).

7. Test piece according to claim 6,
**characterised in that**
- the intermediate layer (13) is configured from high-density polyethylene (HDPE), and/or
- the intermediate layer (13) has a thickness of approx. 0.1 mm.

8. Test piece according to any one of claims 4 to 7,
**characterised in that**
the skin-like/film-like layer (9) has a thickness of approx. 0.052 mm.

9. Test piece according to any one of claims 4 to 8,
**characterised in that**
the test piece (3) has a width b of approx. 20 mm and a thickness a of approx. 6.0 mm.

10. Test piece according to any one of claims 5 to 9,
**characterised in that**
the layer (9) has an adhesive layer, in particular an acrylate adhesive layer that can be attached to the intermediate layer (13) in a positively bonded manner.

11. Device (1) for determining the cutting performance of a knife (2), **characterised by**
- a test piece according to any one of claims 4 to 10 into which the knife (2) to be tested is pressed,
- a first detection device (6) for detecting the push-in force,
- a second detection device (7) for detecting the penetration depth,
- an evaluation device (8) for evaluating the push-in force and penetration depth detected.

## Revendications

1. Procédé prévu pour la détermination du pouvoir de coupe d'un couteau (2), où
le couteau (2) est enfoncé avec sa lame (5) dans un corps de contrôle (3) et pendant l'enfoncement aussi bien la force d'enfoncement que la profondeur de pénétration sont mesurées,
**caractérisé en ce**
**que** le corps de contrôle (12) est composé d'un plastique d'une dureté comprise entre 30 et 90 Shore A et d'une couche (9) semblable à une peau ou à un film en polypropylène (PP).

2. Procédé selon la revendication 1,
**caractérisé en ce**
- **que** le couteau (2) est agencé avec sa lame (5) parallèlement à la surface du corps de contrôle (3),
- **que** le couteau (2) est appuyé avec sa lame (5) sur la surface du corps de contrôle (3), où la lame (5) et la surface du corps de contrôle (3) sont inclinées selon un angle α, en particulier selon un angle α d'environ 30°, par rapport à l'horizontale.

3. Procédé selon l'une quelconque des revendications précédentes,
**caractérisé en ce**
**que** le couteau (2) à contrôler est enfoncé à une profondeur de trois millimètres maximum dans le corps de contrôle (3).

4. Corps de contrôle (3) prévu pour la mise en oeuvre du procédé selon l'une quelconque des revendications 1 à 3 avec un corps de base (12) composé d'un plastique d'une dureté comprise entre 30 et 90 Shore A et d'une couche (9) semblable à une peau ou à un film en polypropylène (PP).

5. Corps de contrôle selon la revendication 4,
**caractérisé en ce**
**que** le plastique du corps de base (12) présente un élastomère thermoplastique (TPE).

6. Corps de contrôle selon la revendication 4 ou 5,
**caractérisé en ce**
**qu'**entre le corps de base (12) et la couche (9) est agencée une couche intermédiaire (13), où la couche intermédiaire (13) peut faire partie du corps de base (12).

7. Corps de contrôle selon la revendication 6,
**caractérisé en ce**
- **que** la couche intermédiaire (13) est réalisée en polyéthylène haute densité (HDPE), et/ou
- **que** la couche intermédiaire (13) présente une épaisseur d'environ 0,1 mm.

8. Corps de contrôle selon l'une quelconque des revendications 4 à 7,
**caractérisé en ce**
**que** la couche (9) semblable à une peau ou à un film présente une épaisseur d'environ 0,052 mm.

9. Corps de contrôle selon l'une quelconque des revendications 4 à 8,
**caractérisé en ce**
**que** le corps de contrôle (3) présente une largeur b d'environ 20 mm et une épaisseur a d'environ 6,0 mm.

10. Corps de contrôle selon l'une quelconque des revendications 5 à 9,
**caractérisé en ce**
**que** la couche (9) présente une couche adhésive pouvant être reliée par liaison de matière à la couche intermédiaire (13), en particulier une couche adhésive acrylique.

11. Dispositif (1) prévu pour la détermination du pouvoir de coupe d'un couteau (2), **caractérisé par**
- un corps de contrôle selon l'une quelconque des revendications 4 à 10, dans lequel le couteau (2) à contrôler est enfoncé,
- un premier dispositif de détection (6) pour détecter la force d'enfoncement,
- un second dispositif de détection (7) pour détecter la profondeur de pénétration,
- un dispositif d'évaluation (8) pour évaluer la force d'enfoncement détectée et la profondeur de pénétration détectée.
